# EUROPEAN PATENT SPECIFICATION

(11) **EP 3 654 129 B1**
(45) Date of publication and mention of the grant of the patent: **28.09.2022**
(21) Application number: 19207937.4
(22) Date of filing: 08.11.2019
(51) Int. Cl.: F16K 31/00, G05D 23/02, F16K 1/36, G05D 23/13

(54) **PART-CIRCULAR VALVE SURFACE FOR WAX VALVE**
TEILKREISFÖRMIGE VENTILOBERFLÄCHE FÜR EIN WACHSVENTIL
SURFACE DE VANNE PARTIELLEMENT CIRCULAIRE POUR VANNE THERMOSENSIBLE

(30) Priority: 19.11.2018 US 201816195306
(43) Date of publication of application: 20.05.2020
(73) Proprietor: Hamilton Sundstrand Corporation, Charlotte, NC 28217-4578 (US)
(72) Inventor: BUTCKA, William W., Colchester, CT 06415 (US); D'ANGELO, Gary F., Winsted, CT 06098 (US)
(74) Representative: Dehns

(56) References cited:
- JP-A- S6 155 480
- US-A- 4 235 416
- US-A1- 2012 247 582

## Description

### BACKGROUND

This application relates to a valve that has a thermally responsive wax plug and wherein a valve poppet has a part-circular surface.

Valves are utilized in any number of modern fluid flow applications. One valve application controls a bypass on a line connecting a fluid to a heat exchanger. If the fluid is below a predetermined temperature, it may be inefficient to send the fluid to the heat exchanger. In such instances, the valve opens to bypass the fluid back to a sump or other source.

One type of valve for providing selective bypass based upon temperature utilizes a wax element that expands when heated. When the wax is heated, it drives a valve poppet against a seat. When the wax cools, it allows a spring assembly to move the valve to a bypass position.

In the prior art valve, there is a frusto-conical shaped valve poppet. This valve poppet is subject to wear.

In addition, the actuation structure for this valve includes a plurality of interacting cylinders and springs. There has been some misalignment between several components as the various members move. This has led to further wear on the valve poppet. US 2012/247582 A1 relates to a temperature sensor fluid flow control valve. Similar valves are also known from the publications US 4235416A and JPS 6155480A.

### SUMMARY

A bypass system is provided as claimed in claim 1.

A bypass valve is provided as claimed in claim 10.

These and other features may be best understood from the following drawings and specification.

### BRIEF DESCRIPTION OF THE DRAWINGS

Figure 1 shows an existing valve.
Figure 2A shows a first embodiment.
Figure 2B is a cross-sectional view along line B-B as shown in Figure 2A.
Figure 2C is a cross-sectional view along line C-C as shown in Figure 2A.
Figure 3 shows yet another embodiment valve.
Figure 4 is a schematic view of sealing contact.

### DETAILED DESCRIPTION

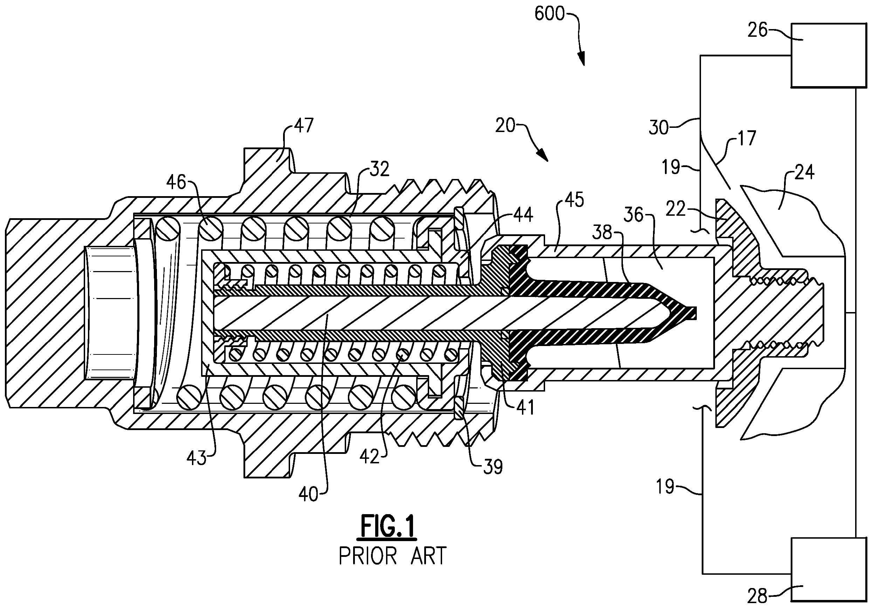

Figure 1 shows a bypass valve 20 in a bypass system 600. A valve poppet 22 is selectively driven to seat on a valve seat 24. A source 26 selectively communicates a fluid to be cooled to a heat exchanger 28. When the valve poppet 22 is not seated on the seat 24, this fluid is allowed to bypass the heat exchanger 128 and return through line 17 to the source 26.

As shown, the bypass fluid in line 17 communicates with the line 19 which is the normal return line from the heat exchanger 28. These two flows combine into a line 30 heading back to the source 26. The source 26 could be a sump and an item that the oil is cooling such as a generator or other system.

Of course, this explanation is greatly simplified. One such fluid may be oil utilized to cool other components in a gas turbine engine although other bypass applications will benefit from this disclosure. It is only under certain conditions that the oil will reach a temperature where the cooling is necessary. It may be inefficient to cool the fluid at times when it is below a predetermined temperature. Thus, the bypass mode improves the efficiency by bypassing the heat exchanger under most operational conditions.

A valve piston 40 is received within a chamber in a valve housing 45. The valve housing is fixed with the valve poppet. Wax 36 is included in a chamber between the housing 45 and the piston 40, and a rubber boot 38 maintains the wax in the chamber. If the fluid passing towards the heat exchanger 28 exceeds a predetermined temperature, it will heat the valve housing 45 and thus the wax 36. The wax 36 will then expand forcing the piston 40 to the left in the Figure. The piston 40 is received within a piston guide 43. The piston 40 has a forward face 41 secured to the boot 38. The valve guide 43 has a forward face 44. A return spring 42 is in the valve guide 43. Another spring 46 is outward of the valve guide 43 and within an outer housing 47 and provides a pressure relief function. The housing 43 applies a force against the snap ring 39. As the piston 40 moves to the left with the wax 36 being heated, it eventually bottoms out on the bottom of the chamber in the valve guide 43, and forces the valve housing 45 and poppet 22 to the right from the Figure 1 position.

The wax plug 36 may be a wax and copper powder combination. The inclusion of the copper assists in heat transfer and the melting of the wax to achieve the fine control of the position of the valve 22.

In this prior system, there may be misalignment between the valve guide 43, the outer housing 47, and the piston 40 as the components move. Moreover, the conical sealing surface between valve poppet 22 and seat 24 can result in undue wear, as mentioned above. The wear is also complicated by the misalignment in movement of the several components.

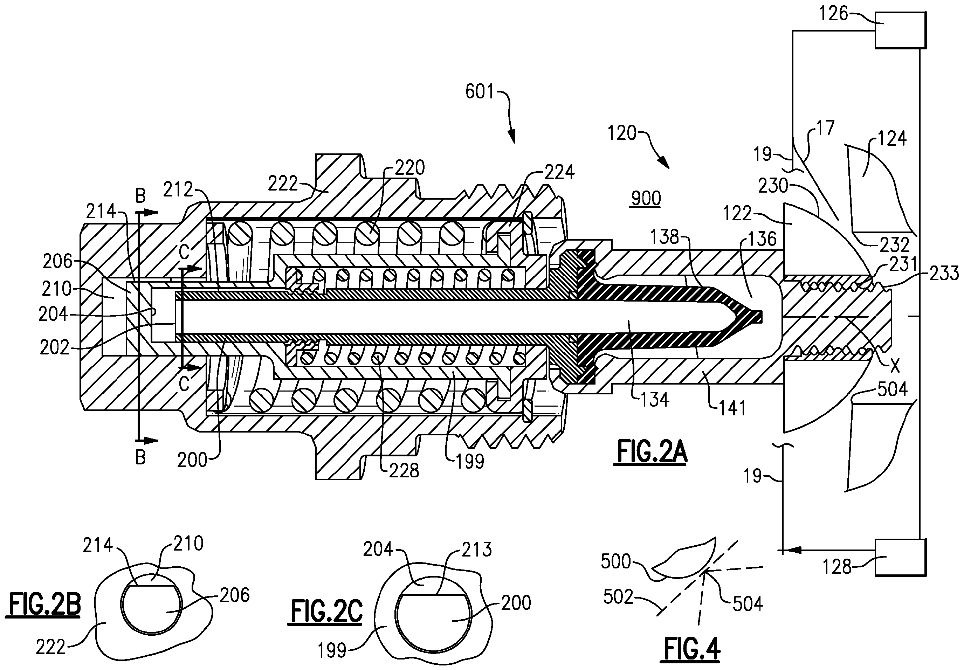

Figure 2A shows a bypass valve embodiment 120 in a bypass system 601 wherein the valve poppet 122 selectively seats against a valve seat 124. Again, the valve operates to bypass fluid from the source 126 on its way to a heat exchanger 128. The wax 136 operates as described above. The piston 134 moves within a valve housing 141. The piston 134 extends to the left to an extension 200, which is received within a chamber 204 in the piston guide 199.

A flat 212 on the extension 200 allows flow of fluid from a chamber beyond the end 202 of the extension portion 200 to prevent hydraulic lock. However, the remainder of the circumferential surface of portion 200 is guided within chamber 204 to provide guidance for the movement of the piston 134 and the valve housing 141. Similarly, the piston guide 199 has a portion 206 extending into a chamber 210 within an outer housing 222. Another flat 214 allows flow of fluid to prevent hydraulic lock, but otherwise, the portion 206 is guided within the housing portion 210.

Figure 2B shows the flat 214 and the guidance from the housing chamber 210 for the portion 206. Figure 2C shows the flat 212 and the piston guide 199 otherwise guiding the extension 200.

The valve poppet 122 has a part spherical outer surface 230 that seats on a break point 232 in the valve seat 124. The combination of the spherical surface seating on a point provides a more reliable seal than in the prior art and reduces wear. As shown, the valve poppet 122 is threaded at 231 to be received on threads 233 on the valve housing 141. This facilitates replacement of the valve poppet 122.

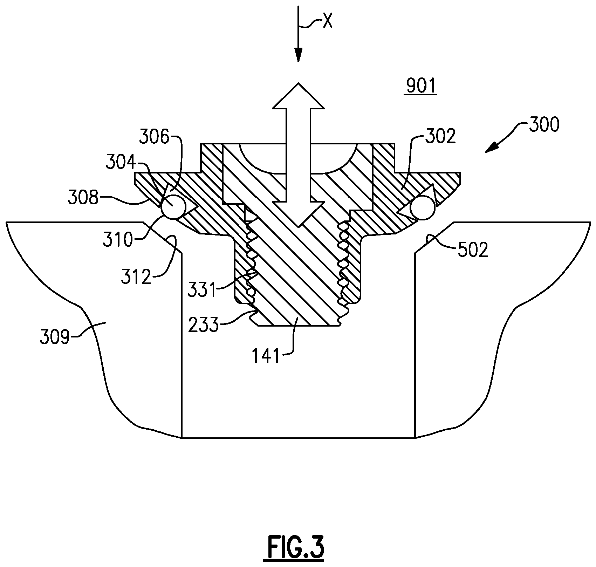

Figure 3 shows an embodiment 300 wherein the valve poppet 302 has a frusto-conical outer portion 308 that seats against a frusto-conical portion 312 in a valve seat 309. Threads 233 and 331 again secure the valve poppet 302 onto the valve housing 141. However, a groove 306 is formed in the otherwise frusto-conical surface 308 and a cylindrical O-ring 304 is placed within the groove 306. Now, the actual sealing contact will be between the cylindrical seal 310 and the frusto-conical portion 312. Again, a more reliable seal and less damaging wear will be experienced than was the case in the prior art.

Figure 4 schematically shows the sealing or valve seating in either the Figure 2A or 3 embodiments. In either there is a part-circular surface 500 that will seat on the valve seat. This may be a conical portion 502 in the Figure 3 embodiment or a sharp breakpoint 504 as in the Figure 2A embodiment.

Taking Figures 2A, 3 and 4 in combination one could say that there is a sealing surface in each of the Figure 2A and 3 embodiments that is part-circular in a plane (900 for Figure 2A, and 901 for Figure 3) in which an axis of movement X of the piston lies.

A bypass system under this disclosure could be said to include a source of a fluid to be cooled and a heat exchanger for selectively cooling the fluid. A bypass valve is mounted on a line to selectively bypass the fluid prior to reaching the heat exchanger. The bypass valve includes a valve poppet and valve seat. The valve further includes a piston moveable along an axis and allowing movement of the valve poppet toward and away from the valve seat. The piston moves within a valve housing. A wax portion expands as a temperature increases, to move the piston and causes the valve poppet to move against the valve seat. The wax portion cools if the temperature lowers such that the valve poppet moves away from the valve seat. There is a sealing surface on the valve poppet in sealing contact with the valve seat. The surface is part-circular in a plane in which said axis lies.

Although the bypass valve is disclosed controlling flow to a heat exchanger, other applications may benefit from the disclosed valve.

## Claims

1. A bypass system comprising:
a source of a fluid;
a bypass valve (120) mounted on a line to selectively bypass the fluid prior to reaching a downstream component, said bypass valve (120) including a valve poppet (122) a valve seat (124), a piston (134), a valve housing (141) and a wax portion, said piston (134) is adapted to move along an axis allowing movement of said valve poppet (122) toward and away from said valve seat (124), said piston (134) is adaped to move within said valve housing (141), said wax portion, in operation, expands as a temperature increases, and causes said valve poppet (122) to move against said valve seat (124), said wax portion, in operation, cools if the temperature lowers such that said valve poppet (122) moves away from said valve seat (124); and
there being a sealing surface on said valve poppet (122) in sealing contact with said valve seat (124) and said sealing surface being part-circular in a plane in which said axis lies;
wherein said valve poppet (122) is part-spherical about said axis, and wherein said valve seat (124) has a sharp break point selectively in contact with said valve poppet (122) to provide said seal, or
wherein said bypass system further comprises a cylindrical seal and wherein the cylindrical seal is received in a recess of said valve poppet (122) such that said seal provides said part-circular portion of said valve poppet (122), and wherein said recess is formed in a frusto-conical surface of said valve poppet (122); the system being **characterised in that**:
said valve poppet (122) is threadably received on threads on said valve housing (141) to facilitate replacement of said valve poppet (122).

2. The bypass system of claim 1, wherein the downstream component is a heat exchanger for selectively cooling the fluid.

3. The bypass system as set forth in any preceding claim, wherein said piston (134) having a remote extension guided within a cylinder in a piston guide (199), a return spring received within said piston guide (199) and said piston guide (199) being received within a cylinder in an outer housing (222).

4. The bypass system as set forth in claim 3, wherein said outer housing cylinder defining an enlarged portion receiving a second spring, and a smaller chamber for guiding said piston guide extension.

5. The bypass system as set forth in claim 4, wherein said piston guide chamber (210) having an enlarged portion receiving said return spring and a second smaller portion guiding said extension.

6. The bypass system as set forth in claim 5, wherein said extension having a flat surface (212) to allow leakage of fluid around said extension from said second smaller portion of said piston guide chamber (210).

7. The bypass system as set forth in claim 6, wherein said piston guide (199) having a flat surface at an outer peripheral surface at a location which is guided within said smaller chamber in said outer housing (222) to allow leakage of fluid from said smaller chamber around said piston guide (199).

8. A bypass valve (120) comprising:
a valve poppet (122); and
a valve seat (124), a piston (134), a valve housing (141), and a wax portion said piston (134) moveable along an axis allowing movement of said valve poppet (122) toward and away from said valve seat (124), said piston (134) moving within said valve housing (141), said wax portion expands as a temperature increases, and causes said valve poppet (122) to move against said valve seat (124), said wax portion cools if a temperature of a wax within the wax portion lowers such that said valve poppet (122) moves away from said valve seat (124);
there being a sealing surface on said valve poppet (122) in sealing contact with said valve seat (124) said sealing surface being part-circular in a plane in which said axis lies; and
said piston (134) having a remote extension guided within a cylinder in a piston guide (199), a return spring received within said piston guide (199) and said piston guide (199) being received within a cylinder in an outer housing (222), said outer housing cylinder defining an enlarged portion receiving a second spring, and a smaller chamber for guiding said piston guide extension, said piston guide chamber (210) having an enlarged portion receiving said guide spring and a second smaller portion guiding said extension, said extension having a flat surface (212) to allow leakage of fluid around said extension from said second smaller portion of said piston guide chamber (210), said piston guide (199) having a flat surface at an outer peripheral surface at a location which is guided within said smaller chamber in said outer housing (222) to allow leakage of fluid from said smaller chamber around said piston guide (199);
wherein said valve poppet (122) is part-spherical about said axis, and wherein said valve seat (124) has a sharp break point selectively in contact with said valve poppet (122) to provide said seal, or
wherein said bypass system further comprises a cylindrical seal and wherein the cylindrical seal is received in a recess of said valve poppet (122) such that said seal provides said part-circular portion of said valve poppet (122), and wherein said recess is formed in a frusto-conical surface of said valve poppet (122); the bypass valve (120) being **characterised in that**:
said valve poppet (122) is threadably received on threads on said valve housing (141) to facilitate replacement of said valve poppet (122).

## Patentansprüche

1. Bypass-System, das Folgendes umfasst:
eine Quelle eines Fluids;
ein Bypassventil (120), das an einer Leitung angebracht ist, um das Fluid selektiv umzuleiten, bevor es eine stromabwärtige Komponente erreicht, wobei das Bypassventil (120) einen Ventilteller (122), einen Ventilsitz (124), einen Kolben (134), ein Ventilgehäuse (141) und einen Wachsabschnitt aufweist, wobei der Kolben (134) angepasst ist, sich entlang einer Achse zu bewegen, die eine Bewegung des Ventiltellers (122) zu und weg von dem Ventilsitz (124) ermöglicht, wobei der Kolben (134) angepasst ist, um sich innerhalb des Ventilgehäuses (141) zu bewegen, wobei sich der Wachsabschnitt im Betrieb bei steigender Temperatur ausdehnt und bewirkt, dass sich der Ventilteller (122) gegen den Ventilsitz (124) bewegt, wobei der Wachsabschnitt im Betrieb abkühlt, wenn die Temperatur sinkt, so dass sich der Ventilteller (122) von dem Ventilsitz (124) wegbewegt; und
wobei eine Dichtfläche auf dem Ventilteller (122) in abdichtendem Kontakt mit dem Ventilsitz (124) vorhanden ist und die Dichtfläche in einer Ebene, in der die Achse liegt, teilkreisförmig ist;
wobei der Ventilteller (122) um die Achse teilkugelförmig ist, und wobei der Ventilsitz (124) einen scharfen Bruchpunkt aufweist, der selektiv mit dem Ventilteller (122) in Kontakt steht, um die Dichtung bereitzustellen, oder
wobei das Bypass-System ferner eine zylindrische Dichtung umfasst und wobei die zylindrische Dichtung in einer Aussparung des Ventiltellers (122) aufgenommen ist, so dass die Dichtung den teilkreisförmigen Abschnitt des Ventiltellers (122) bereitstellt, und wobei die Aussparung in einer kegelstumpfförmigen Oberfläche des Ventiltellers (122) gebildet ist; wobei das System **dadurch gekennzeichnet ist, dass**:
der Ventilteller (122) schraubbar auf Gewinden an dem Ventilgehäuse (141) aufgenommen ist, um den Austausch des Ventiltellers (122) zu erleichtern.

2. Bypass-System nach Anspruch 1, wobei die stromabwärtige Komponente ein Wärmetauscher zum selektiven Kühlen des Fluids ist.

3. Bypass-System nach einem der vorangehenden Ansprüche, wobei der Kolben (134) eine in einem Zylinder in einer Kolbenführung (199) geführte entfernte Verlängerung, eine in der Kolbenführung (199) aufgenommene Rückstellfeder und die Kolbenführung (199), die innerhalb eines Zylinders in einem Außengehäuse (222) aufgenommen wird, aufweist.

4. Bypass-System nach Anspruch 3, wobei der Außengehäusezylinder einen vergrößerten Abschnitt, der eine zweite Feder aufnimmt, und eine kleinere Kammer zum Führen der Kolbenführungsverlängerung definiert.

5. Bypass-System nach Anspruch 4, wobei die Kolbenführungskammer (210) einen vergrößerten Abschnitt, der die Rückstellfeder aufnimmt, und einen zweiten kleineren Abschnitt, der die Verlängerung führt, aufweist.

6. Bypass-System nach Anspruch 5, wobei die Verlängerung eine flache Oberfläche (212) aufweist, um ein Austreten von Fluid um die Verlängerung aus dem zweiten kleineren Abschnitt der Kolbenführungskammer (210) zu ermöglichen.

7. Bypass-System nach Anspruch 6, wobei die Kolbenführung (199) eine flache Oberfläche an einer Außenumfangsfläche an einer Stelle aufweist, die innerhalb der kleineren Kammer in dem Außengehäuse (222) geführt wird, um ein Austreten von Fluid aus der kleineren Kammer um die Kolbenführung (199) herum zu ermöglichen.

8. Bypassventil (120), umfassend:
einen Ventilteller (122); und
einen Ventilsitz (124), einen Kolben (134), ein Ventilgehäuse (141) und einen Wachsabschnitt, wobei der Kolben (134) entlang einer Achse bewegbar ist, die eine Bewegung des Ventiltellers (122) zu und weg von dem Ventilsitz (124) ermöglicht, wobei sich der Kolben (134) innerhalb des Ventilgehäuses (141) bewegt, sich der Wachsabschnitt bei steigender Temperatur ausdehnt und bewirkt, dass sich der Ventilteller (122) gegen den Ventilsitz (124) bewegt, wobei der Wachsabschnitt abkühlt, wenn eine Temperatur eines Wachses innerhalb des Wachsabschnitts sinkt, so dass sich der Ventilteller (122) von dem Ventilsitz (124) wegbewegt;
wobei eine Dichtfläche auf dem Ventilteller (122) in abdichtendem Kontakt mit dem Ventilsitz (124) vorhanden ist, wobei die Dichtfläche in einer Ebene, in der die Achse liegt, teilkreisförmig ist; und
wobei der Kolben (134) eine entfernte Verlängerung, die in einem Zylinder in einer Kolbenführung (199) geführt ist, eine Rückstellfeder, die in der Kolbenführung (199) aufgenommen ist, und die Kolbenführung (199), die in einem Zylinder in einem Außengehäuse (222) aufgenommen ist, aufweist, wobei der Außengehäusezylinder einen vergrößerten Abschnitt, der eine zweite Feder aufnimmt, und eine kleinere Kammer zum Führen der Kolbenführungsverlängerung definiert, wobei die Kolbenführungskammer (210) einen vergrößerten Abschnitt, der die Führungsfeder aufnimmt, und einen zweiten kleineren Abschnitt, der die Verlängerung führt, aufweist, wobei die Verlängerung eine flache Oberfläche (212) hat, um ein Austreten von Fluid um die Verlängerung herum aus dem zweiten kleineren Abschnitt der Kolbenführungskammer (210) zu ermöglichen, wobei die Kolbenführung (199) eine flache Oberfläche an einer Außenumfangsfläche an einer Stelle aufweist, die innerhalb der kleineren Kammer in dem Außengehäuse (222) geführt wird, um ein Austreten von Fluid aus der kleineren Kammer um die Kolbenführung (199) herum zu ermöglichen;
wobei der Ventilteller (122) um die Achse teilkugelförmig ist, und wobei der Ventilsitz (124) einen scharfen Bruchpunkt aufweist, der selektiv mit dem Ventilteller (122) in Kontakt steht, um die Dichtung bereitzustellen, oder
wobei das Bypass-System ferner eine zylindrische Dichtung umfasst und wobei die zylindrische Dichtung in einer Aussparung des Ventiltellers (122) aufgenommen ist, so dass die Dichtung den teilkreisförmigen Abschnitt des Ventiltellers (122) bereitstellt, und wobei die Aussparung in einer kegelstumpfförmigen Oberfläche des Ventiltellers (122) gebildet ist; wobei das Bypassventil (120) **dadurch gekennzeichnet ist, dass**:
der Ventilteller (122) schraubbar auf Gewinden an dem Ventilgehäuse (141) aufgenommen ist, um den Austausch des Ventiltellers (122) zu erleichtern.

## Revendications

1. Système de dérivation comprenant :
une source d'un fluide ;
une vanne de dérivation (120) montée sur une conduite pour dévier sélectivement le fluide avant d'atteindre un composant en aval, ladite vanne de dérivation (120) comportant un clapet de vanne (122), un siège de vanne (124), un piston (134), un boîtier de vanne (141) et une partie de paraffine, ledit piston (134) est agencé pour se déplacer le long d'un axe permettant le mouvement dudit clapet de vanne (122) vers et à l'écart dudit siège de vanne (124), ledit piston (134) est agencé pour se déplacer à l'intérieur dudit boîtier de vanne (141), ladite partie de paraffine, en fonctionnement, se dilate lorsqu'une température augmente, et amène ledit clapet de vanne (122) à se déplacer contre ledit siège de vanne (124), ladite partie de paraffine, en fonctionnement, se refroidit si la température diminue de sorte que ledit clapet de vanne (122) s'éloigne dudit siège de vanne (124) ; et
une surface d'étanchéité étant présente sur ledit clapet de vanne (122) en contact étanche avec ledit siège de vanne (124) et ladite surface d'étanchéité étant partiellement circulaire dans un plan dans lequel se trouve ledit axe ;
dans lequel ledit clapet de vanne (122) est en partie sphérique autour dudit axe, et dans lequel ledit siège de vanne (124) a un point de rupture net sélectivement en contact avec ledit clapet de vanne (122) pour fournir ledit joint d'étanchéité, ou dans lequel ledit système de dérivation comprend en outre un joint cylindrique et dans lequel le joint cylindrique est reçu dans un évidement dudit clapet de vanne (122) de sorte que ledit joint d'étanchéité fournit ladite partie partiellement circulaire dudit clapet de vanne (122), et dans lequel ledit évidement est formé dans une surface tronconique dudit clapet de vanne (122) ; le système étant **caractérisé en ce que** :
ledit clapet de vanne (122) est reçu par filetage sur des fils sur ledit boîtier de vanne (141) afin de faciliter le remplacement dudit clapet de vanne (122).

2. Système de dérivation selon la revendication 1, dans lequel le composant en aval est un échangeur de chaleur pour refroidir sélectivement le fluide.

3. Système de dérivation selon une quelconque revendication précédente, dans lequel ledit piston (134) présente une extension à distance guidée à l'intérieur d'un cylindre dans un guide de piston (199), un ressort de rappel reçu à l'intérieur dudit guide de piston (199) et ledit guide de piston (199) étant reçu à l'intérieur d'un cylindre dans un boîtier externe (222).

4. Système de dérivation selon la revendication 3, dans lequel ledit cylindre de boîtier externe définit une partie agrandie recevant un second ressort, et une chambre plus petite pour guider ladite extension de guidage de piston.

5. Système de dérivation selon la revendication 4, dans lequel ladite chambre de guidage de piston (210) présente une partie agrandie recevant ledit ressort de rappel et une seconde partie plus petite guidant ladite extension.

6. Système de dérivation selon la revendication 5, dans lequel ladite extension présente une surface plate (212) pour permettre une fuite de fluide autour de ladite extension depuis ladite seconde partie plus petite de ladite chambre de guidage de piston (210) .

7. Système de dérivation selon la revendication 6, dans lequel ledit guide de piston (199) présente une surface plate au niveau d'une surface périphérique externe à un emplacement qui est guidé à l'intérieur de ladite chambre plus petite dans ledit boîtier externe (222) pour permettre une fuite de fluide de ladite chambre plus petite autour dudit guide de piston (199).

8. Vanne de dérivation (120) comprenant :
un clapet de vanne (122) ; et
un siège de vanne (124), un piston (134), un boîtier de vanne (141) et une partie de paraffine dudit piston (134) mobile le long d'un axe permettant le mouvement dudit clapet de vanne (122) vers et à l'écart dudit siège de vanne (124), ledit piston (134) se déplaçant à l'intérieur dudit boîtier de vanne (141), ladite partie de paraffine se dilate lorsqu'une température augmente, et amène ledit clapet de vanne (122) à se déplacer contre ledit siège de vanne (124), ladite partie de paraffine se refroidit si la température d'une paraffine à l'intérieur de la partie de paraffine diminue de sorte que ledit clapet de vanne (122) s'éloigne dudit siège de vanne (124) ;
une surface d'étanchéité étant présente sur ledit clapet de vanne (122) en contact étanche avec ledit siège de vanne (124), ladite surface d'étanchéité étant partiellement circulaire dans un plan dans lequel se trouve ledit axe ; et
ledit piston (134) ayant une extension à distance guidée à l'intérieur d'un cylindre dans un guide de piston (199), un ressort de rappel reçu à l'intérieur dudit guide de piston (199) et ledit guide de piston (199) étant reçu à l'intérieur d'un cylindre dans un boîtier externe (222), ledit cylindre de boîtier externe définissant une partie agrandie recevant un second ressort, et une chambre plus petite pour guider ladite extension de guidage de piston, ladite chambre de guidage de piston (210) ayant une partie agrandie recevant ledit ressort de guidage et une seconde partie plus petite guidant ladite extension, ladite extension ayant une surface plate (212) pour permettre une fuite de fluide autour de ladite extension depuis ladite seconde partie plus petite de ladite chambre de guidage de piston (210), ledit guide de piston (199) ayant une surface plate sur une surface périphérique externe à un emplacement qui est guidé à l'intérieur de ladite chambre plus petite dans ledit boîtier externe (222) pour permettre une fuite de fluide depuis ladite chambre plus petite autour dudit guide de piston (199) ; dans lequel ledit clapet de vanne (122) est en partie sphérique autour dudit axe, et dans lequel ledit siège de vanne (124) a un point de rupture net sélectivement en contact avec ledit clapet de vanne (122) pour fournir ledit joint d'étanchéité, ou dans lequel ledit système de dérivation comprend en outre un joint cylindrique et dans lequel le joint cylindrique est reçu dans un évidement dudit clapet de vanne (122) de sorte que ledit joint d'étanchéité fournit ladite partie partiellement circulaire dudit clapet de vanne (122), et dans lequel ledit évidement est formé dans une surface tronconique dudit clapet de vanne (122) ; la vanne de dérivation (120) étant **caractérisée en ce que** :
ledit clapet de vanne (122) est reçu par filetage sur des fils sur ledit boîtier de vanne (141) afin de faciliter le remplacement dudit clapet de vanne (122).
